(19) Europäisches Patentamt European Patent Office Office européen des brevets

(11) **EP 4 439 996 A1**

(12) **EUROPEAN PATENT APPLICATION**

(43) Date of publication:
**02.10.2024 Bulletin 2024/40**

(21) Application number: **23305445.1**

(22) Date of filing: **30.03.2023**

(51) International Patent Classification (IPC):
$H04B\ 7/06^{(2006.01)}$    $H04L\ 1/00^{(2006.01)}$
$H04L\ 1/20^{(2006.01)}$    $H04L\ 25/02^{(2006.01)}$

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Commissariat à l'énergie atomique et aux énergies alternatives 75015 Paris (FR)**

(72) Inventors:
• **CALVANESE STRINATI, Emilio 38054 GRENOBLE CEDEX 9 (FR)**
• **MERLUZZI, Mattia 38054 GRENOBLE CEDEX 9 (FR)**

(74) Representative: **Lavoix 2, place d'Estienne d'Orves 75441 Paris Cedex 09 (FR)**

(54) **WIRELESS COMMUNICATION METHOD BETWEEN A SENDER AND A RECEIVER, AND ASSOCIATED COMMUNICATION SYSTEM**

(57)    The present invention concerns a wireless communication method between a sender and a receiver through a time-varying radio channel, the time-varying radio channel being characterized by channel state information (CSI) and a choice of transmission parameters, the channel state information being estimated each CSI feedback interval;

the method comprising the following steps:
- transmitting (110) data from the sender to the receiver using current transmission parameters;
- processing (120) the transmitted data by the receiver;
- measuring (130) a goal-effectiveness of data processing by the receiver using a predetermined goal-effectiveness metric;
- adapting (140) the CSI feedback interval based of the measured goal-effectiveness;
- adapting (160) the transmission parameters based on the channel state information estimated according to the adapted CSI feedback interval.

FIG.2

**Description**

FIELD OF THE INVENTION

The present invention concerns a wireless communication method between a sender and a receiver. The invention also concerns a communication system associated to such a method.

The present invention can for example be applied to current deployed generations of cellular wireless mobile networks and their future evolutions (6G, 5G, 3GPP LTE, 3GPP LTE A, WiFi, etc.) or to any other type of wireless network.

BACKGROUND OF THE INVENTION

Wireless communication occurs over time-varying radio channels. The temporal scale of channel variability changes as a function of several parameters including for example frequency bands, user mobility patterns, environment (e.g., indoor, outdoor), etc.

For communication to be reliable and to properly optimize and adapt resources, Channel State (CS) Information (CSI) is generally needed at the transmitter and/or the receiver with a certain level of confidence, and with enough freshness. The CSI represents the current knowledge of the wireless channel at the transmitter and/or the receiver. The CS represents the current true channel condition. CSI and CS are not the same in general due to: (i) channel estimation errors, i.e., the quality of the algorithm employed in the estimation, and (ii) channel coherence time, i.e., the time needed for the channel to experience an appreciable variation. While the former depends on the quality and complexity of the channel estimator, the latter depends on the fact that an estimation performed at time t is valid for a specific time interval, say t+$\delta$, after which the channel has changed "too much" to be considered well known at the transceivers. $\delta$ is known as the channel coherence time, while the time elapsed between two successive channel estimations is also known as CSI feedback interval (CSIFI).

CSI is essential for the base station (BS) to schedule user equipment (UEs) and efficiently manage the radio resources as well as to adapt the transmission parameters (modulation order, transmission power, coding rate, etc.). Transmission parameters are adapted to trade robustness of communication (low error rate, error rate lower that a threshold) and spectral efficiency, based on link quality metrics (LQM) received from a central unit (e.g., BS) or from the receiver.

According to known systems and approaches, the channel coherence time $\delta$ and the corresponding CSIFI are defined only with respect to the channel variability and the consequent mismatch between CS and CSI. On the one hand, the larger is the CSIFI, the less resource utilization and signaling overhead are, since each acquisition requires signaling and estimation time. On the other hand, this incurs in potential mismatches, e.g., in case the channel coherence time $\delta$ is too short compared to the CSIFI. This trade-off between signaling overhead and matched/accurate CSI is the typical way of designing the CSIFI. In other words, today the CSIFI is designed based on the channel estimation error and/or the mismatch between the CSI and the CS, which changes over time due to the channel variability (i.e., the coherence time).

Since wireless networks are possibly time-varying and exhibit non stationary behavior (i.e., the channel coherence time may change over time at different time scales), adaptive CSIFI are also known in the art. With this approach, the CSIFI is adapted to the channel coherence time. However, it is still adapted through classical measures involving the measured channel coherence time and the estimation error.

The known method of wireless communication using a fixed or adaptive CSIFI are however not completely satisfactory and their efficiency can be improved.

SUMMARY OF THE INVENTION

One of the aims of the invention is to provide a wireless communication method carrying out an adaptive CSI feedback interval (i.e. CSFI) in more efficient way in comparison with known methods using measures involving the measured channel coherence time and the estimation error.

For this purpose, the invention concerns a wireless communication method between a sender and a receiver through a time-varying radio channel, the time-varying radio channel being characterized by channel state information and a choice of transmission parameters, the channel state information being estimated each CSI feedback interval;
the method comprising the following steps:

- transmitting data from the sender to the receiver using current transmission parameters;
- processing the transmitted data by the receiver;
- measuring a goal-effectiveness of data processing by the receiver using a predetermined goal-effectiveness metric;
- adapting the CSI feedback interval based of the measured goal-effectiveness;
- adapting the transmission parameters based on the channel state information estimated according to the adapted CSI feedback interval.

Provided with these features, the CSI feedback interval according to the invention is adapted based on the goal-effectiveness of data processing. While in traditional communication methods, wireless performance is measured in terms of error rate between the intended transmitted sequence of symbols/bits by the transmitter and the recovered/decode/demodulated one at the receiver (for instance Packet Error Rate (PER), Bit Error Rate (BER)), wireless delay (time to successfully receive a transmitted packet), availability (percentage of time a wireless device is ready to transmit/receive), etc., in the goal-oriented communication method according to the invention, wireless performance is measured in terms of the effect that the decoded information has in performing a task. This means that the notion of reliability according to the invention is more general and is adapted to the specific application enabled by the wireless network.

In other words, the invention proposes to design a goal-oriented CSI feedback interval, i.e., a CSI feedback interval that depends on the actual performance of the application hosted by the wireless network, and not on classical measures including the channel estimation error and the channel coherence time, as per its legacy definition (i.e., time needed for the channel to appreciably change). This leads to a more efficient CSI feedback interval and as a consequence, to a more efficient wireless communication between a sender and a receiver.

According to some embodiments, the transmission parameters comprise at least one of the following elements:

- transmission power;
- number of antennas;
- phases of antennas;
- source coding;
- channel coding including coding rate selection;
- modulation order;
- modulation type (PAM, QAM, OAM, etc...);
- communication spectral efficiency.

According to some embodiments, the goal-effectiveness is measured based on performance in achieving predetermined tasks by at least the receiver and/or the sender, and/or a weighted combination of effectiveness at least at the sender and the receiver.

According to some embodiments, the step of adapting the CSI feedback interval is performed using an optimization problem.

According to some embodiments, the optimization problem comprises maximizing the CSI feedback interval while respecting a goal-effectiveness constraint.

According to some embodiments, the goal-effectiveness constraint is chosen so as the measured goal-effectiveness is greater than a predetermined threshold.

According to some embodiments, the method further comprises a step of reporting the CSI feedback interval to the sender.

According to some embodiments, the step of adapting the transmission parameters is performed by the sender using the reported CSI feedback interval.

According to some embodiments, the step of adapting the transmission parameters is performed using an effective channel coherence time determined by the receiver based on the adapted CSI feedback interval.

According to some embodiments, the step of adapting the CSI feedback interval comprises adding margins to an adaptive value, the margins being determined using the measured goal-effectiveness.

According to some embodiments, the adaptive value is determined based on channel estimation/prediction errors and/or channel coherence time.

The invention also concerns a communication system comprising:

- a sender able to generate and/or collect and/or acquire data;
- a receiver able to process data with a measurable performance;
- a time-varying radio channel configured to transmit data from the sender to the receiver;

the sender, the receiver and the time-varying radio channel being adapted to carry out the method as explained above.

BRIEF DESCRIPTION OF THE DRAWINGS

The invention and its advantages will be better understood upon reading the following description, which is given by way of non-limiting example and which is made with reference to the appended drawings, in which:

- Figure 1 is a schematic view of a wireless communication system according to the invention; and

- Figure 2 is a diagram of a method for carrying out a wireless communication by the communication system of Figure 1.

DETAILED DESCRIPTION OF THE INVENTION

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

As used herein, the term **"goal-oriented communication"** refers to a type of communication in which the success of communication is measured by the effect that the (possibly noisy/corrupted/compressed) decoded information has in performing a task. The performance metric needed to measure this success is called goal-effectiveness herein. The difference between classical and goal-oriented communications can be summarized by the fact that the classical communication seeks at the reliable transmission of bits, i.e., it focuses on the so-called Level A (or, the technical problem), while the goal-oriented communication focuses on the so-called Level C (or, the effectiveness problem). Levels A and C make part of the 3-levels communication problems introduced by SHANNON and WEAVER, W. The Mathematical Theory of Communication. 1949, ch. Recent Contributions to the Mathematical Theory of Communication. Thus, for example, even if some communications can be considered as unreliable in the meaning of Level A (due for example to unreliable transmission of bits), the same communications can be considered as reliable in the meaning of Level C if the decoded information allows achieving a predetermined task.

As used herein, the term **"goal-effectiveness"** refers to performance of an agent in performing tasks using information transmitted by a wireless communication. The performance is measured by a predetermined goal-effectiveness metric. The goal-effectiveness metric is chosen based on the nature of the tasks performed by the agent. This metric can for example show how far the agent is from the goal, or how accurately and/or how fast the goal is achieved, or the probability of achieving the task by the agent, etc.

As used herein, the term **"task"** refers to a list of operations that an agent is able to perform. A task can be performed by the agent using a mathematical model having for example an input comprising data transmitted by a wireless communication from another agent. The mathematic model can comprise a Machine Learning (ML) model or any other model ensuring data processing to perform a given task.

As used herein, the term **"agent"** is used to designate a node which is able to communicate wirelessly with another agent. In other words, an agent is able to communicate through a time-varying radio channel with another agent. For example, an agent can be a sender (i.e. able to code and send data) and/or a receiver (i.e. able to receive and decode data). It is considered in the further description that an agent comprises all necessary hardware and software resources for this purpose. The hardware resources can comprise a processor, a RAM/ROM memory, one or several antennas, power sources, etc. Alternatively or additionally, the hardware resources can comprise one or several programmable logic devices for example of type FPGA ("Field-programmable gate array"). The software resources can comprise all necessary program/applications to ensure data encoding for wireless communication and/or decoding of data transmitted through a wireless communication. Each agent is able to ensure a wireless communication with another agent by controlling its hardware/software resources with transmission parameters. In other words, the communication between a pair of agents is characterized by a time-varying radio channel established between a pair of agents and a choice of the transmission parameters.

The transmission parameters can comprise at least one of the following elements: transmission power, number of antennas, phases of antennas, source coding, channel coding including coding rate selection, modulation order, modulation type (PAM, QAM, OAM, etc...), communication spectral efficiency, etc.

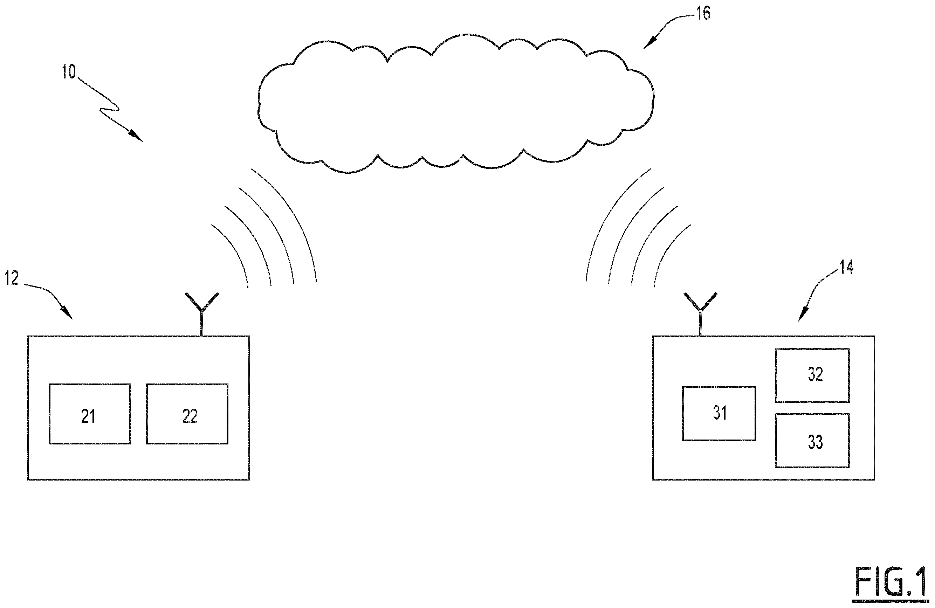

Figure 1 shows a communication system 10 according to the invention. This communication system 10 comprises at least a sender 12, a receiver 14 and a wireless channel 16 also called a time-varying radio channel. The wireless channel 16 connects the sender 12 and the receiver 14. In the example of Figure 1, only one sender 12, one receiver 14 and one wireless channel 16 are shown. However, those skilled in art would understand that in a general case, any number of senders and receivers as well as wireless channels connecting these senders and these receivers, is possible. In other words, the invention can be applied to any number of senders and receivers communicating between them. Additionally, the or each sender 12 can also be a receiver and the or each receiver 14 can also be a sender, depending on the communication direction carried out between these entities. In the further description, the case of only one sender 12 and only one receiver 14 will be explained in further detail.

The sender 12 is an agent which is able to generate (or collect or acquire), encode and send data to the receiver 14 via the wireless channel 16. For this purpose, the sender 12 has all necessary software/hardware resources to ensure data transmission, as explained above. Additionally, in the embodiment of Figure 1, the sender 12 further comprises a database 21 storing current transmission parameters and an optimization module 22 configured to optimize the wireless communication with the receiver 14. The current transmission parameters correspond to transmission parameters currently used by the sender 12 to carry out the wireless communication with the receiver 14 via the channel 16.

To optimize the wireless communication with the receiver 14, the optimization module 22 is configured to modify the current transmission parameters based on channel state information (CSI) relative to the time-varying radio channel 16. Particularly, the channel state information characterizes the time-varying radio channel 16 and particularly, the channel state (i.e. quality, CS) of this channel 16. The channel state information is thus an estimation of the channel state performed for example by an appropriate estimator, with a frequency defined by a time interval, called CSI feedback interval. The estimator can be configured to apply a Link Quality Metric (LQM) to estimate the channel state and can be integrated in the optimization module 22 or be exterior to the optimization module 22. For example, the estimator can be integrated into the receiver 14 or any other external element such a base station (BS).

The receiver 14 is an agent able to receive, decode and process data transmitted via the time-varying channel 16 by the sender 12. For this purpose, the receiver 12 has all necessary software/hardware resources to ensure data reception, as explained above. Additionally, as it is shown in Figure 1, the receiver 14 further comprises a data processing module 31 configured to process data.

Particularly, the data processing module 31 is configured to process notably the data received from the sender 12 to perform one or several predetermined tasks with a measurable goal-effectiveness. The goal-effectiveness can be measured using a predetermined goal-effectiveness metric. The task(s) and the goal-effectiveness metric are chosen based on the nature of the receiver 14 and/or the task that is required to perform. In some cases, these elements can also be chosen based on the nature of the sender 12. Several non-limiting examples will be given below. Those skilled in the art would understand that many other examples are possible.

**Example 1**

Both sender 12 and receiver 14 present moveable objects, such as robots for example, which communicate between them to meet each other. In other words, in this case, each agent 12, 14 has the task to meet the other agent using for example calculations performed by an AI model. The goal-effectiveness metric can for example be the inverse of relative distance between the agents 12, 14, or the probability that the agents meet each other in a given time interval. In other words, the goal-effectiveness is high when the robots are close to each other.

**Example 2**

The sender 12 is a camera transmitting wirelessly images to the receiver 14 and the receiver 14 is a computational node adapted to process the images in order to recognize objects, using for example an AI model. In this case, recognizing a given objet can be the task defined for the receiver 14 and the goal-effectiveness metric is the probability that the recognized object corresponds to the real object viewed by the camera.

**Example 3**

The receiver 14 is a moveable object (such as a guided vehicle or robot for example) which is controlled by the sender 12 presenting a controlling agent. The task of the receiver 14 can thus be defined as: not to fall while marching in case of a robot and avoiding collision with another object while driving in case of a vehicle. The goal-effectiveness metric can be the probability that the task is achieved by the agent.

**Example 4**

Two or more agents (including at least one sender 12 and at least one receiver 14) training a common ML (machine learning) model in a distributed (or federated) fashion by sharing preprocessed data and/or local models with a fusion center that computes the global model. In this case, the goal-effectiveness can be defined as the inverse of cross entropy during training. Since multiple communication rounds are generally required, adaptive CSI feedback interval can lighten the communication overhead.

In the embodiment of Figure 1, the receiver 14 further comprises a measuring module 32 and a feedback module 33. The measuring module 32 is configured to measure the goal-effectiveness of data processing performed by the data processing module 31. As previously explained, for this purpose, the measuring module 32 is configured to apply the predetermined goal-effectiveness metric. The feedback module 33 is configured to adapt the CSI feedback interval based of the measured goal-effectiveness, as it will be explained in further detail below.

In other embodiments of the invention, the module(s) 32 and/or 33 can be integrated in any other entity or distributed between some entities. For example, the modules 32 and 33 can be at least partially integrated into a base station (BS) different from each of the receiver 14 and sender 12.

Additionally or alternatively, in some embodiments, the measuring module 32 is configured to measure the goal-effectiveness at one or more sender(s) 12 and one or more receiver(s) 14. This goal-effectiveness can be in this case a weighted combination of effectiveness at the sender(s) 12 and the receiver(s) 14. This case corresponds to a cooperative goal-oriented communication case.

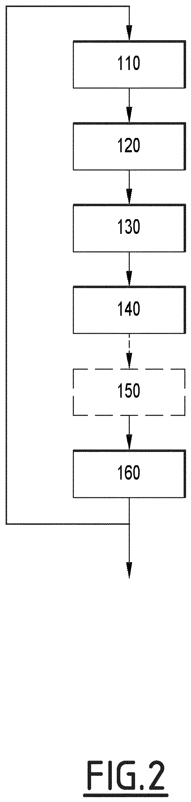

The communication system 10 is configured to carry out a communication method according to the invention which is now will be explained in reference to Figure 2 presenting a diagram of its steps.

During step 110, data is transmitted from the sender 12 to the receiver 14 via the time-varying radio channel 16, using the current transmission parameters stored for example in the database 21. Initially, the transmission parameters can for example correspond to default parameters used to establish the channel 16.

During next step 120, the data is received and decoded by the receiver 14. Then, the data is being processed by the data-processing module 31 to perform one or several tasks determined for the receiver 14.

During next step 130, the measuring module 32 measures the goal-effectiveness of the data processing performed by the data-processing module 31. As previously disclosed, the goal-effectiveness is measured using the predetermined goal-effectiveness metric which is chosen based on the nature of the tasks performed by the data-processing module 31.

During next step 140, the feedback module 33 adapts the CSI feedback interval based of the measured goal-effectiveness. According to a particular embodiment, for this purpose, an optimization problem is used. For example, let us consider time as organized in slots t = 1,2,3, ..., and denote by:

  $i$ the last time slot in which CSI has been acquired;
  $j$ the next time slot in which CSI is to acquired;
  $\varepsilon_i$ the measured goal-effectiveness at time i.

In this case, the optimization problem can be formulated as follows:

$$\max_{j} \mathbb{E}_{\pi}\{j - i\}$$

with the following conditions:

(a)

$$j \geq i;$$

(b)

$$\mathbb{E}_{\pi}\{\varepsilon\} \geq \overline{\varepsilon}$$

where the condition (b) corresponds to a goal-effectiveness constraint and $\overline{\varepsilon}$ to a predetermined threshold.

Other methods, such for example a Markov Decision Process can be used in order to adapt the CSI feedback interval.

Additionally, according to some embodiments, the CSI feedback interval is adapted only partially using the goal-effectiveness approach. In this case, step 140 can comprise adding margins to an adaptive value, which are determined using the measured goal-effectiveness. In other words, only the margins can be determined using the measured goal-effectiveness during this step. As for the adaptive value, it can be determined using conventional approaches based for example on channel estimation/prediction errors and/or channel coherence time.

According to one embodiment, during next step 150, the feedback module 33 reports the adapted CSI feedback interval for example to the optimization module 22 of the receiver 12. In this case, during next step 160, the optimization module 22 adapts the transmission parameters based on the channel state information estimated directly according to the adapted CSI feedback interval.

According to another embodiment, no reporting step 150 is performed. In this case, during step 160, the receiver 14 receives data from the sender 12 according to an effective channel coherence time which is determined in function of the adapted CSI feedback interval. The effective channel coherence time is a coherence time whose duration is determined by the measured goal-effectiveness. While classically the channel coherence time is defined as the time for the channel to change by a predefined threshold defined a priori, the effective channel coherence time is the time needed for the channel to change as much as what is necessary to degrade the goal-effectiveness compared to the service requirements. This effective channel coherence time can be then measured by the optimization module 22 which adapts the transmission parameters accordingly.

The steps 110 to 160 can then be iterated several times until the communication between the sender 12 and the receiver 14 is completed, i.e., the service has been provided and/or the goal has been achieved, with the latter for goals with an ending state (example of two robots meeting in one place).

## Claims

1. A wireless communication method between a sender (12) and a receiver (14) through a time-varying radio channel (16), the time-varying radio channel (16) being **characterized by** channel state information (CSI) and a choice of transmission parameters, the channel state information being estimated each CSI feedback interval;
the method comprising the following steps:

   - transmitting (110) data from the sender (12) to the receiver (14) using current transmission parameters;
   - processing (120) the transmitted data by the receiver (14);
   - measuring (130) a goal-effectiveness of data processing by the receiver (14) using a predetermined goal-effectiveness metric;
   - adapting (140) the CSI feedback interval based of the measured goal-effectiveness;
   - adapting (160) the transmission parameters based on the channel state information estimated according to the adapted CSI feedback interval.

2. The method according to claim 1, wherein the transmission parameters comprise at least one of the following elements:

   - transmission power;
   - number of antennas;
   - phases of antennas;
   - source coding;
   - channel coding including coding rate selection;
   - modulation order;
   - modulation type (PAM, QAM, OAM, etc...);
   - communication spectral efficiency.

3. The method according to claim 1 or 2, wherein the goal-effectiveness is measured based on performance in achieving predetermined tasks by at least the receiver (14) and/or the sender (12), and/or a weighted combination of effectiveness at least at the sender (12) and the receiver (14).

4. The method according to any one of the preceding claims, wherein the step (140) of adapting the CSI feedback interval is performed using an optimization problem.

5. The method according to claim 4, wherein the optimization problem comprises maximizing the CSI feedback interval while respecting a goal-effectiveness constraint.

6. The method according to claim 5, wherein the goal-effectiveness constraint is chosen so as the measured goal-effectiveness is greater than a predetermined threshold.

7. The method according to any one of the preceding claims, further comprising a step (150) of reporting the CSI feedback interval to the sender (12).

8. The method according to claim 7, wherein the step (160) of adapting the transmission parameters is performed by the sender (12) using the reported CSI feedback interval.

9. The method according to any one of claims 1 to 6, wherein the step (160) of adapting the transmission parameters is performed using an effective channel coherence time determined by the receiver (14) based on the adapted CSI feedback interval.

10. The method according to any one of the preceding claims, wherein the step (140) of adapting the CSI feedback interval comprises adding margins to an adaptive value, the margins being determined using the measured goal-effectiveness.

11. The method according to claim 10, wherein the adaptive value is determined based on channel estimation/prediction errors and/or channel coherence time.

12. A communication system (10) comprising:

    - a sender (12) able to generate and/or collect and/or acquire data;
    - a receiver (14) able to process data with a measurable performance;
    - a time-varying radio channel (16) to transmit data from the sender (12) to the receiver (14);

the sender (12), the receiver (14) and the time-varying radio channel (16) being adapted to carry out the method according to any one of claims 1 to 11.

FIG.1

FIG.2

Europäisches
Patentamt

European
Patent Office

Office européen
des brevets

# EUROPEAN SEARCH REPORT

Application Number

EP 23 30 5445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/160480 A1 (ZHAO LIANG [CN] ET AL) 27 May 2021 (2021-05-27) <br> * paragraphs [0029], [0034], [0051], [0089], [0099], [0189], [0193], [0200] * | 1-12 | INV. <br> H04B7/06 <br> H04L1/00 <br> H04L1/20 <br> H04L25/02 |
| X | EP 1 821 443 A1 (SAMSUNG ELECTRONICS CO LTD [KR]; KOREA ADVANCED INST SCI & TECH [KR]) 22 August 2007 (2007-08-22) <br> * paragraphs [0005], [0014], [0020], [0021] * | 1-12 | |
| X | HONG SEUNGHUI ET AL: "Machine learning-based adaptive CSI feedback interval", <br> ICT EXPRESS, [Online] <br> 23 November 2022 (2022-11-23), <br> XP055925134, <br> ISSN: 2405-9595, DOI: <br> 10.1016/j.icte.2021.11.007 <br> Retrieved from the Internet: <br> URL:https://www.sciencedirect.com/science/article/pii/S2405959521001545/pdfft?md5=ad5985f5f4ef571549aa161034c33371&pid=1-s2.0-S2405959521001545-main.pdf> <br> [retrieved on 2023-08-21] <br> * sections 1-4 * | 1-12 | |

| | | | TECHNICAL FIELDS SEARCHED (IPC) |
|---|---|---|---|
| | | | H04B <br> H04L |

The present search report has been drawn up for all claims

| Place of search | Date of completion of the search | Examiner |
|---|---|---|
| Munich | 22 August 2023 | Vucic, Jelena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 5445

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2023

| Patent document cited in search report | | Publication date | Patent family member(s) | | Publication date |
|---|---|---|---|---|---|
| US 2021160480 | A1 | 27-05-2021 | CN | 109983775 A | 05-07-2019 |
| | | | US | 2019327463 A1 | 24-10-2019 |
| | | | US | 2021160480 A1 | 27-05-2021 |
| | | | WO | 2018121775 A1 | 05-07-2018 |
| EP 1821443 | A1 | 22-08-2007 | EP | 1821443 A1 | 22-08-2007 |
| | | | KR | 20070082165 A | 21-08-2007 |
| | | | US | 2007207742 A1 | 06-09-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHANNON ; WEAVER, W.** Recent Contributions to the Mathematical Theory of Communication. *The Mathematical Theory of Communication.,* 1949